**Europäisches Patentamt**

(19) **European Patent Office**

**Office européen des brevets**

(11) Publication number: **0 160 095**
**B1**

(12) **EUROPEAN PATENT SPECIFICATION**

(45) Date of publication of patent specification: **01.08.90**

(51) Int. Cl.⁵: **G 11 B 7/08**

(21) Application number: **84903660.3**

(22) Date of filing: **29.09.84**

(86) International application number:
**PCT/JP84/00465**

(87) International publication number:
**WO 85/01605 11.04.85 Gazette 85/09**

(54) **TRACKING SERVO CIRCUIT FOR OPTICAL DISK.**

(30) Priority: **30.09.83 JP 180606/83**

(43) Date of publication of application:
**06.11.85 Bulletin 85/45**

(45) Publication of the grant of the patent:
**01.08.90 Bulletin 90/31**

(84) Designated Contracting States:
**AT CH DE FR GB LI SE**

(56) References cited:
**EP-A-0 093 582**
**FR-A-2 536 196**
**GB-A-2 090 437**
**GB-A-2 110 843**
**JP-A-58 105 435**

**PATENTS ABSTRACTS OF JAPAN, vol. 7, no. 32 (P-174)1177r, 8th February 1983; & JP-A-57 183 671 (HITACHI SEISAKUSHO K.K.) 12-11-1982**
**PATENTS ABSTRACTS OF JAPAN, vol. 7, no. 127 (P-201)1272r, 3rd June 1983; & JP-A-58 45 666 (SONY K.K.) 16-03-1983**

(73) Proprietor: **SONY CORPORATION**
**7-35 Kitashinagawa 6-Chome Shinagawa-ku**
**Tokyo 141 (JP)**

(72) Inventor: **BABA, Hideyuki**
**Sony Corporation 7-35, Kitashinagawa 6-chome**
**Shinagawa-ku Tokyo 141 (JP)**
Inventor: **MITSUMORI, Shigeyoshi**
**Sony Corporation 7-35, Kitashinagawa 6-chome**
**Shinagawa-ku Tokyo 141 (JP)**

(74) Representative: **Allam, Peter Clerk et al**
**LLOYD WISE, TREGEAR & CO. Norman House**
**105-109 Strand**
**London WC2R 0AE (GB)**

(56) References cited:
**PATENTS ABSTRACTS OF JAPAN, vol. 4, no. 115 (P-23)597r, 16th August 1980, page 115 P 23; & JP-A-55 70 941 (UNIVERSAL PAIONIA K.K.) 28-05-1980**

(56) References cited:
PATENTS ABSTRACTS OF JAPAN, vol. 6, no.
121 (P-126)999r, 6th July 1982; & JP-A-57 46 357
(MATSUSHITA DENKI SANGYO K.K.) 16-03-1982
PATENTS ABSTRACTS OF JAPAN, vol. 8, no.
141 (P-283)1578r, 30th June 1984; & JP-A-59 38
936 (SONY K.K.) 03-03-1984

Journal of the SMPTE,vol 83, no 7 (July
1974)(New York), K D Broadbent (A review of
the MCA Disco-Vision System), pages 554-559

## Description

This invention relates to a tracking servo control circuit for maintaining the tracking of an optical pickup with respect to an optical disc. The maintenance of proper tracking is necessary for reproducing inforamtion recorded on the optical disc. The disc may be a video disc, a digital audio disc or the like used as a recording medium.

Optical discs are recording media which store video and/or audio information on their surfaces in the form of spirally arranged pits or relief information. The recorded information on such optical discs is reproduced through an optical pickup. The optical pick-up directs a light ray such as a laser beam or the like along the spiral recording track, while converting the reflected light into an electrical signal from which the required information content is obtained. A servo mechanism is usually employed to move the optical pick-up with accurate tracing along the recording track.

Typical servo mechanism control methods include the so-called 3-spot method, push-pull method and DPD (Differential Phase Detection) method. In any one of these methods a tracking error is detected from the reflecting position on an optical disc of a spot light ray from an optical pickup, the intensity of reflected light or the like. The tracking of the optical pickup is controlled by feeding back the tracking error signal to a control mechanism such as an objective lens or a mirror of the optical pickup device.

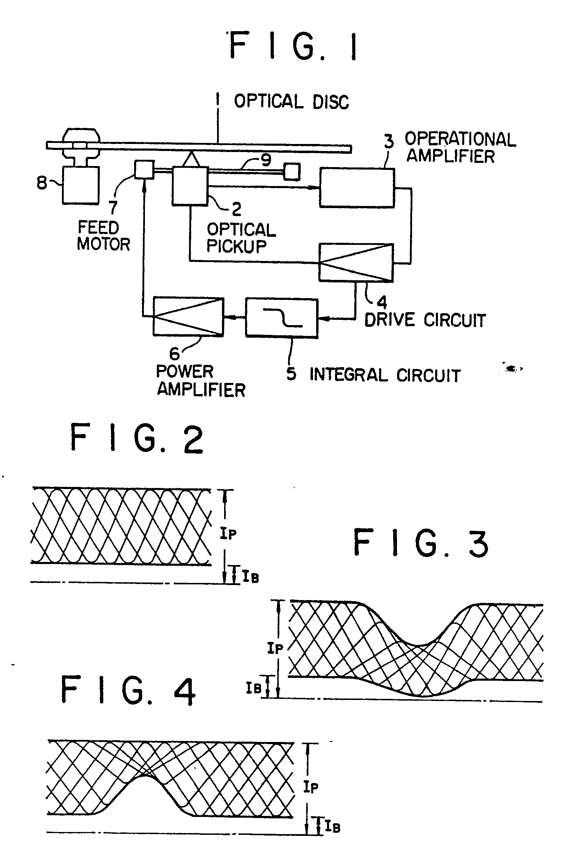

Shown in block diagram in Fig. 1 of the accompanying drawings is an example of such a servo mechanism circuit, in which a rotating optical disc 1 has directed thereat a laser beam from an optical pickup 2 which converts the reflected light from the optical disc 1 into electrical output signals. The servo mechanism comprises an operational amplifier circuit 3 for producing a tracking error signal derived from the output of the optical pickup 2, and a drive circuit 4 for driving a tracking coil provided in the optical pickup 2. The tracking coil drives an objective lens or a reflecting mirror to adjust the laser spotting position on the recording track of the optical disc 1.

An integrator circuit 5 detects a DC component of the tracking error signal, and after amplification by a power amplifier 6, the output of the integrator circuit 5 drives a thread feed motor 7 or a linear motor which moves the optical pickup 2 as a whole by means of a feed screw 9. A spindle motor 8 rotates a turntable for the optical disc.

When the disc 1 is flawless, the laser beam from the optical pickup 2 can trace the track correctly by the servo mechanism of the tracking servo control circuit. However, an instantaneous drop of the intensity of the reflected light results, just as if there were a tracking error, when there is dust on the optical disc 1 or a defect or flaw such as an occluded air bubble in the recorded track. As a result, the optical pickup is caused to shift from the correct track to an adjacent track (i.e. a track jump), producing a large disturbance in the reproduced sound or image in some cases.

We have become aware that the instantaneous variation of the tracking error of this sort, which is caused by an abrupt drop in the reflected light intensity, can be prevented to some extent by decreasing the loop gain of the servo mechanism circuit. However, the reduction of the servo mechanism circuit loop gain makes it difficult to control the objective lens or reflecting mirror in conformity with impact or vibration externally applied to the reproducing apparatus. Such shock may arise when, for example, the optical disc apparatus is mounted in a vehicle.

Japanese published patent specification 57-46357A discloses a tracking servo circuit for tracking of an optical pickup with respect to an optical disc, in which a tracking control loop is responsive to a tracking error signal derived from the optical pickup and has a gain which is changed from a value that exists in the absence of an external disturbance to another value to compensate for an external disturbance. In this specification the only type of disturbance to which the loop responds is a drop out of the signal from the optical pickup due to some defect of the disc. The reduction in the signal due to the defect is detected and is used to interrupt the tracking control loop for a predetermined period, thereby effectively reducing the loop gain to zero over this period. In such a system the loop no longer responds to the tracking error signal. During the period of interruption the output portion of the tracking loop is controlled by the value of the tracking error signal that existed before the loop was interrupted. Thus for this period there is no true servo relationship maintained between the present value of the tracking error signal and the control of the optical pickup. JP 57-46357A has no recognition of the requirements of loop contorl in response to a different form of disturbance such as mechanical shock. Nor does it offer any form of gain control in the loop other than interrupting the loop completely which is undesirable.

The present invention is based on a recognition that for an optical defect on the disc the loop gain should be reduced below its normal value but should have a real (non-zero) value at which the true tracking error signal continues to control the servo loop. The present invention is also based on a recognition that a different change in the operation of the loop is desirable to deal with mechanical shock. In this case it has been found to be desirable to increase the loop gain above its normal value.

Specification GB 2 090 437A describes a tracking servo circuit for maintaining the focus of an optical pickup with respect to an optical disc, in which a tracking control loop is responsive to a tracking error signal derived from the optical pickup and includes a variable gain amplifier to compensate for external disturbances. More particularly, the control loop of GB 2 090 437A has an amplifier whose gain is increased as a function of the magnitude of the focus error signal. It is stated that the error signal magnitude may increase due to external disturbances. The nature of the external disturbance is not discussed but any disturbance of the focus causes an increase in gain in accord with the increased focus error signal. Thus there is no distinction between different types of disturbance. Furthermore, the specification is concerned with loss of focussing not with maintaining alignment of the optical pickup with the optical track on the disc.

It is known from JP—A—57183671 to prevent malfunction of a tracking control circuit by lowering the response to a high band signal of a loop while noise is produced.

Heretofore, it has been extremely difficult for the conventional servo mechanism circuit to maintain the optical pickup in correct tracking against both condition defects on optical discs and external mechanical disturbances.

According to the present invention, there is provided a tracking servo circuit for controlling the tracking of an optical pickup with respect to an optical disc in which a tracking control loop is responsive to a tracking error signal derived from the optical pickup and has a gain that is changed from a normal value that exists in the absence of an external disturbance to another value to compensate for an external disturbance, characterised in that:

said tracking control loop is settable to first and second gain values below and above respectively said normal gain value, and at which gain values said loop continues to respond to said tracking error signal, and

said tracking control loop comprises:

a first detector responsive to an RF signal generated by said optical pickup and bearing the information to be recovered from the optical disc, said first detector being operable to detect a first modulation of the envelope of the RF signal that is indicative of a defect on the optical disc and to set the gain of said loop to said first value, and

a second detector responsive to said RF signal to detect a second modulation of the envelope of said RF signal that is indicative of an externally applied shock and to set the gain of said loop to said second gain value.

In a preferred tracking servo circuit, the first and second envelope detectors comprise respective comparators acting on different levels (hereinafter denoted Ip and $I_B$) of the envelope of the RF signal. Each comparator is provided with a respective reference signal whereby each comparator is responsive to a reduction in the envelope magnitude from the level acted upon as the comparator. A reduction of the envelope magnitude may decrease the upper level of the envelope in absolute terms or increase the lower level of the envelope in absolute terms. To detect both changes in level, the RF signal may be inverted in one detector relative to the other before being applied to the respective comparator.

The tracking servo circuit according to the present invention can change its loop gain upon detection of a defect on an optical disc or an externally applied impact, thereby allowing the optical pickup to trace the track of the optical disc accurately. A drop in the read-out level of recorded information due to a flaw or dust adhering on the optical disc and a drop in the amplitude of recorded information caused by a mechanical shock or other external disturbance are detected separately to control the servo gain in response to the resulting detection signals. Thus, the servo gain is lowered to render the servo control circuit insensitive to an abnormal tracking error signal resulting from tracing a defect on the optical disc, but is increased to cope with a vibration caused by an external disturbance, thereby to maintain accurate tracking of the optical pickup against vibrations.

Reference will now be made to the accompanying drawings, Fig. 1 of which has already been referred to, and the remaining figures of which will now be discussed in connection with a fuller description of the practice of the invention.

In the accompanying drawings:

Fig. 1 is a block diagram showing a conventional tracking servo circuit;

Fig. 2 is an eye pattern of RF signal from an optical pickup;

Fig. 3 is an example of an eye pattern of the RF signal generated at a defective portion of an optical disc;

Fig. 4 is an example of an eye pattern of the RF signal generated by a mechanical shock;

Fig. 5 is a block diagram, showing an example of the circuit for detecting the envelope of the RF signal;

Fig. 6 are explanatory, waveform diagrams showing the operation of the circuit shown in Fig. 5; and

Fig. 7 is a block diagram showing an example of a tracking servo circuit according to the present invention.

It is known that the output signal (hereinafter referred to as "RF signal" for brevity) of an optical pickup draws, as shown in Fig. 2, an eye pattern between a signal level $I_P$ corresponding to the total reflection and a signal level $I_B$ corresponding to spotting of the laser beam on a pit of the optical disc when the optical pickup 2 correctly travels on the recording track. The magnitude of the reflected light ray, however, instantaneously drops when the laser beam is spotted on deposited dust or air bubble on the optical disc, producing an RF signal with its signal level $I_P$ being lowered as shown in Fig. 3. On such an occasion, a track jump is induced by production of a spike-like tracking error signal.

If an external impact or vibration is applied to the optical disc during reproduction, an RF signal with a smaller modulation level is produced as shown in Fig. 4 due to defocussing or detracking resulting from the variation in the relative distance between the optical pickup and disc, though the total reflection level $I_P$ remains unchanged. Consequently, the tracking servo circuit is operated by the tracking error signal which is produced at that time, controlling the laser spot in such a manner as to trace the track. However, since the tracking error signal resulting from an external shock has a high frequency variable component, a tracking servo circuit with a low loop gain is unable to control the objective lens or reflecting mirror in response to the tracking error signal, causing track jumps.

It is now proposed that the tracking servo circuit is arranged to continuously monitor for a first modulation of the envelope of the RF signal indicative of the optical pickup tracing a deposited foreign matter on an optical disc or a defect such as air bubble occluded in the disc and for a second modulation of the envelope of the RF signal which is indicative of a tracking error when an impact or other shock is applied from outside, thereby automatically adjusting the responsiveness of the tracking servo mechanism of the optical pickup to prevent track jumps.

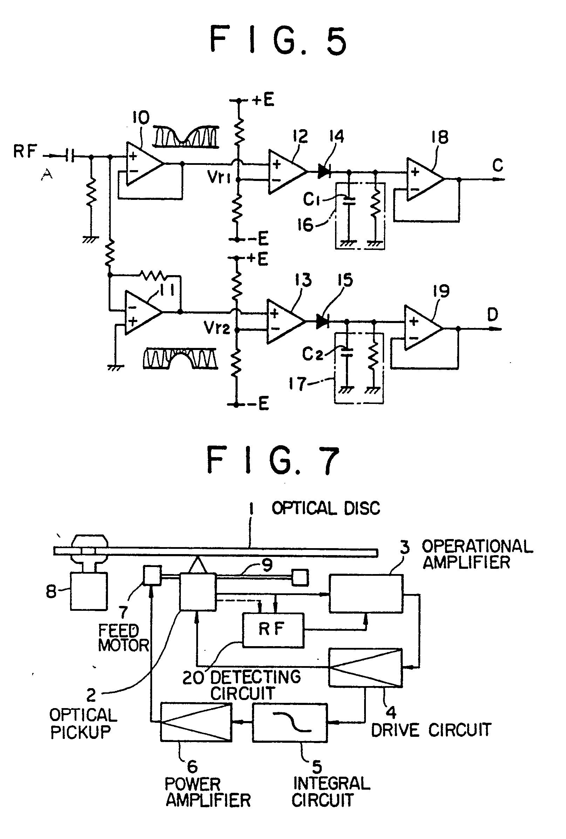

Fig. 5 illustrates a circuit for detecting the abnormalities in the envelope of an RF signal as discussed in the preceding paragraph. The RF signal is applied simultaneously to a positive phase (non-inverting) amplifier 11. The amplifier outputs are applied to inputs of comparators 12 and 13 respectively to the other inputs of which are applied predetermined reference voltages $Vr_1$ and $Vr_2$ respectively. The comparator outputs are connected through diodes respectively to respective time constant circuits 16 and 17, and hence output ampifiers 18 and 19.

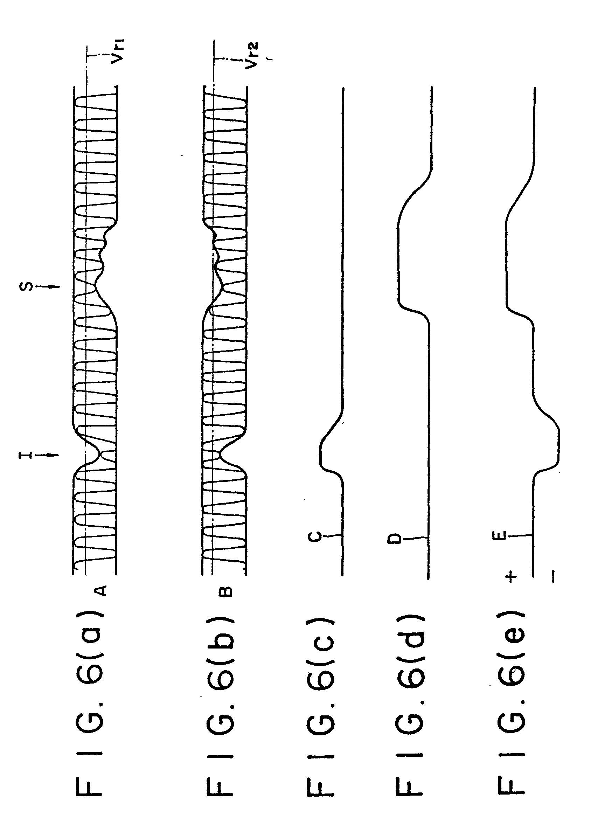

The operation of this circuit is now explained with reference to the waveform diagrams in Figs. 6(a) to 6(e).

Shown in Fig. 6(a) is the waveform of output A of the RF signal amplifier 10 in a case where the optical pickup 2 comes upon a defective portion of the optical disc at point I, and receives an external impact at point S. The inverse phase amplifiers 11 produces output B with a waveform as shown in Fig. 6(b).

The output A of the positive phase amplifier 10 is compared with the reference voltage $Vr_1$ by the succeeding comparator 12 and, only when it is at a lower voltage level than the reference voltage $Vr_1$, does an output signal pass thorough the diode 14 to charge a capacitor $C_1$ of the time constant circuit 16. Accordingly, as shown in Fig. 6(c), the output amplifier 18 produces a detection signal C corresponding to the modulated portion of the RF signal at point I. However, the comparator 12 does not produce an output signal at point S because the modulated portion of the RF signal is at a high level and, therefore, the detection signal is produced at the output terminal of the amplifier 18.

On the other hand, the output signal of the comparator 13, which is supplied with the output B of the inverse phase amplifier 11, passes through the diode 15 only when the output B is at a lower level than the reference voltage $Vr_2$, detecting only the modulation at point S and not the modulation at point I. Thus, the detection signal D is produced by the output amplifier 19 (Fig. 6(d)).

Accordingly, the above-described circuit can distinguish the causes of distortion of RF signal which is produced by the optical pickup, and can control the loop gain E of the tracking servo circuit in such a manner as to lower the loop gain E below a normal value in response to the detection signal C which is produced upon detection of a flaw or dust adhering on the optical disc, and to increase the loop gain E above a normal value in response to the detection signal D which is produced upon detection of an externally applied impact or vibration, thereby permitting to prevent track jumps (Fig. 6(e)). The normal gain value applies in undisturbed operation. As shown in Fig. 7, the above-described abnormality detection circuit 20 is added to a conventional circuit to adjust, for example, the gain of the operational amplifier circuit 3 in the tracking loop. It becomes possible to lower the responsiveness of the tracking servo by the detection signal C for preventing track jumps due to dust or flaws on a disc and to enhance the responsiveness by the detection signal D to let the laser beam trace the recording track with high sensitivity against vibrations.

It is to be understood that Fig. 5 shows merely an embodiment for detecting the modulation of the envelope of the RF signal due to abnormalities, and it may be substituted by other circuit arrangements if desired. Although the adjustment of the loop gain of the tracking servo circuit is effected by varying the gain of the operational amplifier circuit 3 in response to the signals from the output amplifiers 18 and 19 in the embodiment of Fig. 7, it is also possible to supply the signals to a different part of the tracking servo circuit where the loop gain can be changed, for example, to the drive circuit 4 to vary its output level.

As described hereinabove, the tracking servo circuit embodying the present invention constantly checks the RF signal from an optical pickup and, upon detection of a deficiency or a defect, adjusts the normal loop gain of the circuit to a smaller or greater value depending upon the cause of the difficiency or defect, thereby maintaining an optimum loop gain (responsiveness) for the circuit to prevent track jumps which would otherwise be caused by flaws on optical discs or externally applied vibrations.

## Claims

1. A tracking servo circuit for controlling the tracking of an optical pickup (2) with respect to an optical disc (1) in which a tracking control loop (3:4) is responsive to a tracking error signal derived from the optical pickup (2) and has a gain that is changed from a normal value that exists in the absence of an external disturbance to another value to compensate for an external disturbance, characterized in that:

said tracking control loop (3:4) is settable to first and second gain values below and above respectively said normal gain value, and at which gain values said loop continues to respond to said tracking error signal, and

said tracking control loop comprises:—

a first detector (10: 12: 14: 18) responsive to an RF signal generated by said optical pickup (2) and bearing the information to be recovered from the optical disc (1), said first detector (10:12:14:18) being operable to detect a first modulation (Fig. 3) of the envelope of the RF signal that is indicative of a defect on the optical disc and to set the gain of said loop (3:4) to said first value, and

a second detector (11:13:15:19) responsive to said RF signal to detect a second modulation (Fig. 4) of the envelope of said RF signal that is indicative of an externally applied shock and to set the gain of said loop (3:4) to said second gain value.

2. A tracking servo circuit as claimed in Claim 1 in which said first and second detectors comprise respective comparators (12, 13) acting on different levels of said RF signal, each comparator being provided with a respective reference signal (Vr₁, Vr₂) whereby each comparator (12, 13) is responsive to a reduction in envelope magnitude of said RF signal from the level acted upon by the comparator.

**Patentansprüche**

1. Spurführungsservoschaltung für die Steuerung bzw. Regelung der Spurführung eines optischen Aufnehmers (2) in bezug auf eine optische Scheibe bzw. Platte (1), worin eine Spurführungssteuerungs- bzw. -regelungsschleife (3:4) auf ein Spurführungsfehlersignal anspricht, das vom optischen Aufnehmer (2) abgeleitet ist und eine Verstärkung aufweist, die von einem normalen Wert, der in Abwesenheit einer externen Störung vorherrscht, zu einem anderen Wert verändert wird, um eine äußere Störung zu kompensieren, dadurch gekennzeichnet, daß:

die genannte Spurführungssteuerungs- bzw. -regelungsschleife (3:4) auf erste und zweite Verstärkungswerte jeweils unter und über dem genannten normalen Verstärkungswert einstellbar ist und bei welchen Verstärkungswerten die genannte Schliefe weiterhin auf das genannte Spurführungsfehlersignal anspricht, und

die genannte Spurführungssteuerungs- bzw. -regelungsschleife umfaßt:

einen ersten Detektor (10:12:14:18), der auf ein Hochfrequenz-Signal anspricht, das vom genannten optischen Aufnehmer (2) erzeugt wird und die Information trägt, die von der optischen Platte (1) gewonnen werden soll, wobei der genannte erste Detektor (10:12:14:18) betätigbar ist, um eine erste Modulation (Fig. 3) der Hüllkurve des Hochfrequenz-Signals zu detektieren, die einen Defekt auf der optischen Platte anzeigt und die Verstärkung der genannten Schliefe (3:4) auf den genannten ersten Wert einzustellen, und

einen zweiten Detektor (11:13:15:19), der auf das genannte Hochfrequenz-Signal anspricht, um eine zweite Modulation (Fig. 4) der Hüllkurve des genannten Hochfrequenzy-Signals zu detektieren, die einen von außen ausgeübten Stoß anzeigt und die Verstärkung der genannten Schleife (3:4) auf den genannten zweiten Verstärkungswert einzustellen.

2. Spurführungsservoschaltung nach Anspruch 1, in der die genannten ersten und zweiten Detektoren jeweilige Komparatoren (12, 13) aufweisen, die auf verschiedene Werte des genannten Hochfrequenz-Signals wirken, wobei jeder Komparator mit einem jeweiligen Bezugssignal (Vr₁, Vr₂) versehen ist bzw. beliefert wird, wodurch jeder Komparator (12, 13) auf eine Verringerung der Größe der Hüllkurve des genannten Hochfrequenz-Signals von dem Pegel anspricht, auf den der Komparator einwirkt.

**Revendications**

1. Circuit d'asservissement de poursuite destiné à commander la poursuite d'un capteur optique (2) sur un disque optique (1), dans lequel une boucle (3, 4) de commande de poursuite est commandée par un signal d'erreur de poursuite tiré du capteur optique (2) et a un gain qui est changé d'une valeur normale qui existe en l'absence de perturbation externe, à une autre valeur permettant la compensation de la perturbation externe, caractérisé en ce que

la boucle (3, 4) de commande de poursuite peut être réglée à une première et à une seconde valeur de gain qui sont respectivement inférieure et supérieure à la valeur normale du gain, la boucle continuant à être sensible au signal d'erreur de poursuite pour ces valeurs de gain, et

la boucle de commande de poursuite comporte:

un premier détecteur (10, 12, 14, 18) sensible à un signal à haute fréquence créé par le capteur optique (2) et contenant l'information à lire sur le disque optique (1), le premier détecteur (10, 12, 14, 18) étant destiné à détecter une première modulation (figure 3) de l'enveloppe du signal à haute fréquence qui est représentative d'un défaut du disque optique et à régler le gain de la boucle (3, 4) à la première valeur, et

un second détecteur (11, 13, 15, 19) sensible au signal à haute fréquence et destiné à détecter une seconde modulation (figure 4) de l'enveloppe du signal à haute fréquence qui est représentative d'un choc appliqué depuis l'extérieur et à régler le gain de la boucle (3, 4) à la seconde valeur du gain.

2. Circuit d'asservissement de poursuite selon la revendication 1, dans lequel le premier et le second détecteur comprennent des comparateurs respectifs (12, 13) agissant à des niveaux différents du signal à haute fréquence, chaque comparateur ayant un signal respectif de référence (Vr₁, Vr₂), et bien que chaque comparateur (12, 13) est sensible à une réduction de l'amplitude de l'enveloppe du signal à haute fréquence par rapport au niveau pour lequel le comparateur agit.

## F I G. I

OPTICAL DISC

3 OPERATIONAL AMPLIFIER

9

8

7

2 OPTICAL PICKUP

FEED MOTOR

4 DRIVE CIRCUIT

6 POWER AMPLIFIER

5 INTEGRAL CIRCUIT

## F I G. 2

$I_P$

$I_B$

## F I G. 3

$I_P$

$I_B$

## F I G. 4

$I_P$

$I_B$

# F I G. 5

# F I G. 7

F I G. 6(a) A

F I G. 6(b) B

F I G. 6(c)

F I G. 6(d)

F I G. 6(e)

$V_{r1}$

$V_{r2}$

I

S

C

D

E

+

−

EP 0 160 095 B1